# EUROPÄISCHE PATENTSCHRIFT

(11) **EP 0 953 201 B1**
(45) Veröffentlichungstag und Bekanntmachung des Hinweises auf die Patenterteilung: **26.10.2005**
(21) Anmeldenummer: 98904003.5
(22) Anmeldetag: 07.01.1998
(51) Int. Cl.: H01J 29/00, H04N 9/29

(54) **KALTLEITERANORDNUNG**
THERMISTOR SYSTEM
SYSTEME DE THERMISTANCE

(30) Priorität: 17.01.1997 DE 19701475
(43) Veröffentlichungstag der Anmeldung: 03.11.1999
(73) Patentinhaber: EPCOS AG, 81669 München (DE)
(72) Erfinder: KAHR, Werner, A-8530 Deutschlandsberg (AT)
(74) Vertreter: Epping - Hermann - Fischer
(86) Internationale Anmeldenummer: PCT/DE1998/000024
(87) Internationale Veröffentlichungsnummer: WO 1998/032150

(56) Entgegenhaltungen:
- US-A- 4 024 427
- US-A- 4 939 498
- PATENT ABSTRACTS OF JAPAN vol. 018, no. 020 (E-1489), 13.Januar 1994 & JP 05 258905 A (MATSUSHITA ELECTRIC IND CO LTD), 8.Oktober 1993,
- PATENT ABSTRACTS OF JAPAN vol. 015, no. 094 (E-1041), 6.März 1991 & JP 02 305289 A (MATSUSHITA ELECTRIC IND CO LTD), 18.Dezember 1990,

## Beschreibung

Die vorliegende Erfindung betrifft eine Kaltleiteranordnung zur Verwendung in einer Schaltung für die Entmagnetisierung von Farbbildröhren-Lochmasken nach dem Oberbegriff des Patentanspruchs 1.

Eine derartige Kaltleiteranordnung ist aus US-A- 4,024,427 bekannt, wobei dort die Kaltleiter in Serie geschaltet sind.

Weiterhin ist es aus JP-A 05 258905 bekannt bei einer thermisch gekoppelten Kaltleiteranordnung die Kontaktelemente flächenhaft an der Gehäusewandung abzustützen.

Kaltleiteranordnungen für den vorgenannten Zweck sind beispielsweise aus dem Datenbuch 1996 "Kaltleiter" der Anmelderin Seiten 37 und 38 bekannt. Mindestens ein Kaltleiter dieser Art dient dabei zur Reduzierung des Stroms in einer Entmagnetisierungsspule von einem Anfangswert auf einen Reststromwert. Gemäß einer Ausführungsform wird eine Entmagnetisierungsschaltung für den genannten Zweck durch die Reihenschaltung eines Kaltleiters und einer Entmagnetisierungsspule gebildet, welche an einer Wechselspannungsquelle liegt.

Gemäß einer weiteren Ausführungsform kann eine derartige Schaltungsanordnung auch zwei thermisch gekoppelte Kaltleiter enthalten, von denen der eine der in Reihe zur Entmagnetisierungsspule liegende Schalt-Kaltleiter ist, während parallel zu dieser Reihenschaltung ein mit dem Schalt-Kaltleiter thermisch gekoppelter Heiz-Kaltleiter bzw. Netz-Kaltleiter liegt. Die so aufgebaute Schaltung liegt wiederum an einer Versorgungswechselspannung. Bei dieser Schaltung kann der Reststrom durch die Entmagnetisierungsspule gegenüber der oben genannten Schaltung mit nur einem Schalt-Kaltleiter weiter reduziert werden, wobei der Schalt-Kaltleiter dafür zusätzlich zur Eigenerwärmung durch den Netz- bzw. Heizkaltleiter fremd beheizt wird.

Abhängig von den Bildröhreneigenschaften werden zum Teil niederohmige Schalter und/oder mit einem sogenannten "Long decay"-Verhalten bei hohen Anfangsströmen benötigt. Bei bekannten Lösungen für diese Anforderungen sind großvolumige Kaltleiterscheiben vorgesehen, wobei für die Realisierung von extrem niederohmigen Konzepten eine elektrische Parallelschaltung zweier Ausführungsformen mit einem einzigen Kaltleiter oder mit zwei Kaltleitern der oben erläuterten Ausführungsformen zum Einsatz kommt.

Durch die Parallelschaltung ist einerseits im Sinne der geforderten Niederohmigkeit eine Halbierung des Widerstandes möglich, während andererseits die Aufteilung des Anfangsstroms auf zwei Schalter im Sinne des geforderten "Long decay"-Verhaltens eine Abschaltverzögerung gegeben ist.

Unwirtschaftlich ist dabei die Beschaltung von zwei Gehäusebauformen mit der Entmagnetisierungsspule, wodurch dieses Konzept teuer wird.

Der vorliegenden Erfindung liegt die Aufgabe zugrunde, eine einfache und damit billigere Lösung des vorgenannten Problems zu schaffen.

Diese Aufgabe wird durch eine Kaltleiteranordnung gelöst, welche die im Patentanspruch 1 angeführten Merkmale aufweist.

Weiterbildungen der Erfindung sind Gegenstand von Unteransprüchen.

Die Erfindung wird nachfolgend anhand von Ausführungsbeispielen gemäß den Figuren der Zeichnung näher erläutert. Es zeigt:
Figur 1 ein schematisches Schaltbild einer Entmagnetisierungsschaltungsanordnung mit einer erfindungsgemäß ausgebildeten Kaltleiteranordnung; und
Figur 2 eine vorteilhafte Möglichkeit des Einbaus einer erfindungsgemäßen Kaltleiteranordnung in ein Gehäuse.

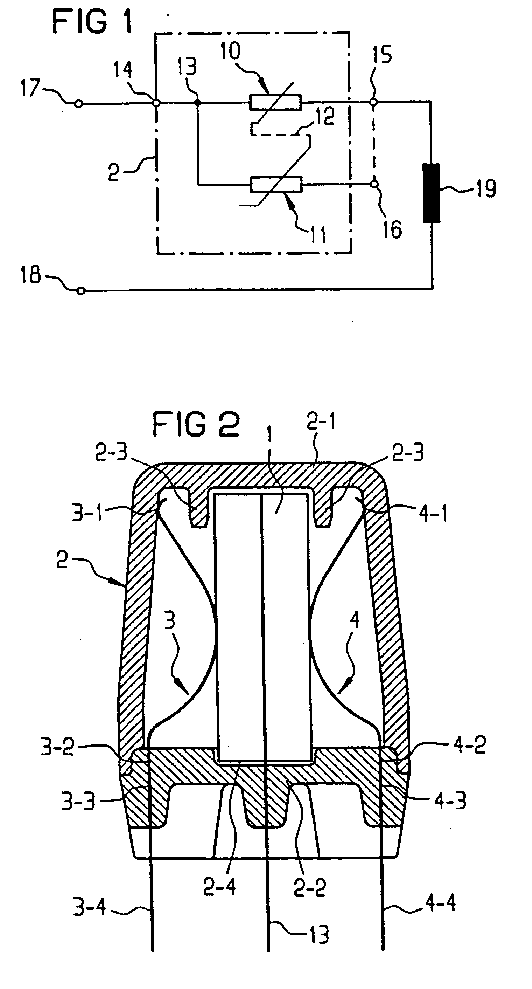

Gemäß Figur 1 sind bei einer Kaltleiteranordnung zwei als Schalter dienende thermisch gekoppelte Kaltleiterscheiben 10 und 11 vorgesehen, welche elektrisch parallel geschaltet bzw. parallel schaltbar sind, und die in einem Stromkreis 17, 18 einer in der Zeichnung nicht dargestellten Wechselspannungsquelle in Serie zu einer Entmagnetisierungsspule 19 eines Fernsehgerätes angeordnet sind. Die thermische Kopplung der Kaltleiterscheiben 10 und 11 ist dabei schematisch durch eine Strichverbindung 12 angedeutet. Die thermisch gekoppelten Kaltleiterscheiben 10 und 11 sind in einem schematisch strichpunktiert angedeuteten Gehäuse 2 angeordnet.

Für die Parallelschaltung bzw. die Parallelschaltbarkeit ist jeweils ein elektrischer Anschluß der Kaltleiterscheiben 10 und 11 in einem Schaltungspunkt 13 elektrisch miteinander verbunden. Der jeweils andere elektrische Anschluß der Kaltleiterscheiben 10 und 11 ist auf einen Schaltungspunkt 15 bzw. 16 geführt. Diese Schaltungspunkte 15 und 16 können aus dem Gehäuse 2 herausgeführt sein, so daß es einem Anwender je nach Anwendungsfall möglich ist, durch eine gestrichelt angedeutete elektrische Verbindung der Schaltungspunkte 15 und 16 die Parallelschaltung der Kaltleiterscheiben 10 und 11 zu realisieren.

Es ist jedoch auch möglich, die auf die Schaltungspunkte 15 und 16 führenden Anschlüsse der Kaltleiterscheiben 10 und 11 innerhalb des Gehäuses elektrisch fest miteinander zu verbinden, so daß die elektrische Parallelschaltung der beiden Kaltleiterscheiben 10 und 11 vom Hersteller vorgegeben innerhalb der Gehäusebauform vorliegt.

Eine mögliche vorteilhafte Ausführungsform eines Einbaus einer Kaltleiteranordnung nach Figur 1 in ein Gehäuse ist in Figur 2 dargestellt. In dieser Figur ist die durch die Kaltleiterscheiben 10 und 11 nach Figur 1 gebildete Kaltleiteranordnung schematisch durch eine Einheit 1 dargestellt. Generell wird dabei die Gesamtanordnung durch die Einheit 1, das Gehäuse 2 sowie Kontaktfederelemente 3 und 4 gebildet. Für die nachfolgenden Erläuterungen sind eine Gehäuseoberseite gesondert mit 2-1 und ein Gehäuseboden mit 2-2 bezeichnet. Die Einheit 1 wird an der Gehäuseoberseite 2-1 durch Ansätze 2-3 und am Gehäuseboden 2-2 durch eine Ausnehmung 2-4 in ihrer Lage gehalten.

Die Federkontaktelemente 3, 4 sind jeweils an zwei Abstützstellen 3-1, 3-2 bzw. 4-1, 4-2 im Gehäuse abgestützt, wobei die Abstützstellen auf voneinander abgewandten Seiten jeweils einer Kontaktstelle an der Einheit 1 angreifen.

Die Federkontaktelemente 3, 4 sind vorzugsweise Federblechelemente, die gesehen in einer Richtung von den Abstützstellen 3-1, 3-2 bzw. 4-1, 4-2 am Gehäuse 2 zur Kontaktstelle 3-5 bzw. 4-5 am Bauelementekörper 1 hin vorzugsweise konkav ausgebildet sind. Die Abstützstellen 3-1, 3-2 bzw. 4-1, 4-2 liegen wie dargestellt im Bereich der Gehäuseoberseite 2-1 bzw. des Gehäusebodens 2-2.

Die Abstützstellen 3-1, 3-2 bzw. 4-1, 4-2 der Federkontaktelemente 3, 4 sind im Bereich des Gehäusebodens 2-2 vorzugsweise dadurch gebildet, daß eine Verlängerung des konkaven Federkontaktelemente-Teils durch den Gehäuseboden 2-2 gestochen ist. Die Durchstichbereiche sind dabei mit 3-3 bzw. 4-3 bezeichnet.

Durch diese Ausbildung der Federkontaktelemente 3, 4 wird einerseits eine hohe dauerhafte Klemmwirkung realisiert, die für das Lebensdauerverhalten der Kaltleiteranordnung von entscheidender Bedeutung ist. Da darüber hinaus die Federkontaktelemente 3, 4 mittels ihrer Verlängerungen 3-4 bzw. 4-4 durch den Gehäuseboden 2-2 gestochen sind, bleibt die sich daraus ergebende Gehäuseöffnung auf den Federquerschnitt beschränkt. Daraus ergibt sich eine Minimierung der Gehäuseöffnung mit dem wesentlichen Vorteil, daß externe Schadstoffe weitgehend vom Gehäuseinneren ferngehalten werden können, was wiederum zu einer Erhöhung der Betriebssicherheit führt.

Die Verlängerungen 3-4 und 4-4 entsprechen dabei den Schaltungspunkten 15 und 16, während der Schaltungspunkt 13 direkt aus Figur 2 ersichtlich ist.

## Patentansprüche

1. Kaltleiteranordnung zur Verwendung in einer Schaltung für die Entmagnetisierung von Farbbildröhren-Lochmasken mit mindestens zwei elektrisch parallel schaltbaren Kaltleitern (10, 11), die thermisch gekoppelt und in ein Gehäuse (2) eingebaut sind, und die durch Federelemente abgestützt und kontaktiert sind,
**dadurch gekennzeichnet,**
**daß** eine durch die Kaltleiterelemente (10, 11) gebildete Einheit (1) durch an der Gehäuseoberseite (2-1) angeordnete Ansätze (2-3) und durch eine am Gehäuseboden (2-2) angeordnete Ausnehmung (2-4) gehaltert ist, daß die Einheit (1) durch zwei Federkontaktelemente (3, 4) im Bauelementegehäuse (2) derart elektrisch kontaktiert und gehaltert ist, daß jedes Federkontaktelement (3, 4) an zwei Abstützstellen (3-1, 3-2; 4-1, 4-2) im Gehäuse abgestützt ist, daß die Federkontaktelemente (3,4) als Federblechelemente ausgebildet sind, daß die Abstützstellen (3-1, 3-2; 4-1, 4-2) der Kontaktelemente (3,4) im Bereich der Gehäuseoberseite (2-1) bzw. des Gehäusebodens (2-2) angeordnet sind, und daß die Abstützstelle (3-2; 4-2) der Federkontaktelemente (3, 4) im Bereich des Gehäusebodens (2-2) **dadurch** gebildet ist, daß eine Verlängerung (3-4; 4-4) des gebogenen Federkontaktelemente-Teils durch den Gehäuseboden (2-2) gestochen ist.

2. Kaltleiteranordnung nach Anspruch 1,
**dadurch gekennzeichnet,**
**daß** die Kaltleiter (10, 11), dieselbe Funktion besitzen, einen Strom in einer Entmagnetisierungsspule (19) zu begrenzen.

3. Kaltleiteranordnung nach Anspruch 1 oder 2,
**dadurch gekennzeichnet,**
**daß** die Kaltleiter (10, 11) elektrisch und/oder mechanisch gleich dimensioniert sind.

4. Kaltleiteranordnung nach einem der Ansprüche 1 bis 3,
**dadurch gekennzeichnet,**
**daß** jeweils ein elektrischer Anschluß der Kaltleiterelemente (1; 10, 11) innerhalb des Gehäuses (2) zusammengeschaltet, der jeweils andere elektrische Anschluß getrennt aus dem Gehäuse (2) herausgeführt ist und diese Anschlüsse zur elektrischen Parallelschaltung der Kaltleiterelemente (1; 10, 11) extern zusammenschaltbar sind.

5. Kaltleiteranordnung nach einem der Ansprüche 1 bis 3,
**dadurch gekennzeichnet,**
**daß** die Kaltleiterelemente (1; 10, 11) innerhalb des Gehäuses (2) intern elektrisch parallel geschaltet sind.

6. Kaltleiteranordnung nach einem der Ansprüche 1 bis 5,
**dadurch gekennzeichnet,**
**daß** die Federkontaktelemente (3, 4) gesehen in einer Richtung von den Abstützstellen (3-1, 3-2; 4-1, 4-2) am Gehäuse (2) zur Kontaktstelle am Bauelementekörper (1) hin vorzugsweise konkav ausgebildet sind.

## Claims

1. PTC thermistor arrangement for use in a circuit for demagnetizing shadowmasks of colour picture tubes, having at least two PTC thermistors (10, 11) which can be electrically connected in parallel are thermally coupled and incorporated in a housing (2), and are supported and afforded contact by spring elements,
**characterized in that** a unit (1) formed by the PTC thermistor elements (10, 11) is retained by means of attachments (2-3) arranged on the housing top side (2-1) and by means of a recess (2-4) arranged on the housing base (2-2), **in that** the unit (1) is retained and afforded electrical contact by means of two spring contact elements (3, 4) in the component housing (2) in such a way that each spring contact element (3, 4) is supported at two supporting points (3-1, 3-2; 4-1, 4-2) in the housing, **in that** the spring contact elements (3, 4) are designed as spring metal-sheet elements, **in that** the supporting points (3-1, 3-2; 4-1, 4-2) of the contact elements (3, 4) are arranged in the region of the housing top side (2-1) and housing base (2-2), and **in that** in the region of the housing base (2-2), the supporting point (3-2; 4-2) of the spring contact elements (3, 4) is formed by an extension (3-4; 4-4) of the bent part of the spring contact elements being pierced through the housing base (2-2).

2. PTC thermistor arrangement according to Claim 1,
**characterized in that** the PTC thermistors (10, 11) have the same function of limiting a current in a demagnetizing coil (19).

3. PTC thermistor arrangement according to Claim 1 or 2,
**characterized in that** the PTC thermistors (10, 11) are dimensioned identically in electrical and/or mechanical terms.

4. PTC thermistor arrangement according to one of Claims 1 to 3,
**characterized in that** in each case one electrical terminal of the PTC thermistor elements (1; 10, 11) is interconnected inside the housing (2), the respective other electrical terminal is routed separately out of the housing (2) and these connections can be externally interconnected for the purpose of electrically connecting the PTC thermistor elements (1; 10, 11) in parallel.

5. PTC thermistor arrangement according to one of Claims 1 to 3,
**characterized in that** the PTC thermistor elements (1; 10, 11) are electrically connected in parallel internally within the housing (2).

6. PTC thermistor arrangement according to one of Claims 1 to 5,
**characterized in that** the spring contact elements (3, 4) are designed such that they are preferably concave as seen in a direction from the supporting points (3-1, 3-2; 4-1, 4-2) on the housing (2) towards the contact point on the component body (1).

## Revendications

1. Dispositif de thermistance à coefficient positif de température à utiliser dans un circuit pour la désaimantation de masques de trous de tube image en couleurs, comprenant au moins deux thermistances (10, 11) à coefficient positif de température qui peuvent être montées en parallèle électriquement, qui sont couplées thermiquement et qui sont montées dans un boîtier (2) et qui sont soutenues et mises en contact par des éléments élastiques,
**caractérisé**
**en ce qu'**une unité (1) formée par les éléments (10, 11) de thermistance à coefficient positif de température est maintenue par des tétons (2-3) disposés sur le côté (2-1) supérieur du boîtier et par un évidement (2-4) disposé sur le fond (2-2) du boîtier, en ce que l'unité (1) est mise en contact électriquement et maintenue par deux éléments (3, 4) de contact élastique dans le boîtier (2) du composant, de sorte que chaque élément (3, 4) de contact élastique s'appuie sur deux points (3-1, 3-2 ; 4-1, 4-2) d'appui dans le boîtier, en ce que les éléments (3, 4) de contact élastique sont constitués en éléments en tôle pour ressort, en ce que les points (3-1, 3-2 ; 4-1, 4-2) d'appui des éléments (3, 4) de contact sont disposés dans la zone du côté (2-1) supérieur du boîtier ou du fond (2-2) du boîtier et en ce que les points (3-1, 3-2 ; 4-1, 4-2) d'appui des éléments (3, 4) de contact élastique sont formés dans la zone du fond (2-2) du boîtier par le fait qu'un prolongement (3-4 ; 4-4) de la pièce d'élément de contact à ressort courbé est piqué dans le fond (2-2) du boîtier.

2. Dispositif de thermistance à coefficient positif de température suivant la revendication 1,
**caractérisé**
**en ce que** les thermistances (10, 11) à coefficient positif de température ont la même fonction de limiter un courant dans une bobine (19) de désaimantation.

3. Dispositif de thermistance à coefficient positif de température suivant la revendication 1 ou 2,
**caractérisé**
**en ce que** les thermistances (10, 11) à coefficient positif de température ont les mêmes dimensions du point de vue électrique et/ou mécanique.

4. Dispositif de thermistance à coefficient positif de température suivant l'une quelconque des revendications 1 à 3,
**caractérisé**
**en ce que**, respectivement, une borne électrique des éléments (1 ; 10, 11) de thermistance à coefficient positif de température est interconnectée à l'intérieur du boîtier (2), respectivement l'autre borne électrique sort séparément du boîtier (2) et ses bornes peuvent être interconnectées extérieurement pour le montage en parallèle électriquement des éléments (1 ; 10, 11) de thermistance à coefficient positif de température.

5. Dispositif de thermistance à coefficient positif de température suivant l'une quelconque des revendications 1 à 3,
**caractérisé**
**en ce que** les éléments (1 ; 10, 11) de thermistance à coefficient positif de température sont montés à l'intérieur du boîtier (2) de façon interne en parallèle électriquement.

6. Dispositif de thermistance à coefficient positif de température suivant l'une quelconque des revendications 1 à 5,
**caractérisé**
**en ce que** les éléments (3, 4) de contact élastique sont constitués, de préférence, de façon concave, considéré dans une direction allant des points (3-1, 3-2 ; 4-1, 4-2) d'appui sur le boîtier (2) au point de contact sur le corps (1) du composant.
